Europäisches Patentamt

European Patent Office

Office européen des brevets

(11) Publication number: **0 414 535 A1**

## (12) EUROPEAN PATENT APPLICATION

(21) Application number: **90309237.7**

(22) Date of filing: **22.08.90**

(51) Int. Cl.⁵: **F02C 6/20**, F02C 9/00, B60L 11/12, B60L 11/16

(30) Priority: **25.08.89 GB 8919346**

(43) Date of publication of application:
**27.02.91 Bulletin 91/09**

(84) Designated Contracting States:
**BE CH DE ES FR IT LI NL SE**

(71) Applicant: **NOEL PENNY TURBINES LIMITED**
**Siskin Drive, Toll Bar End**
**Coventry, CV3 4FE(GB)**

(72) Inventor: **Penny, Robert Noel**
**The Beeches, 17 Moreall Meadow**
**Gibbet Hill, Coventry CV4 7HL(GB)**
Inventor: **Poole, Joseph John**
**277 Station Road**
**Balsall Common, Warwickshire CV7 7EG(GB)**

(74) Representative: **Healy, Cecilia Patricia et al**
**Walford & Hardman Brown, 5 The Quadrant**
**Coventry CV1 2EL(GB)**

(54) Gas turbine engine drive system.

㉗ In a gas turbine engine system the gas turbine (1) acts as a prime mover and includes an electrical generator/motor (2) in driving connection with the rotor (13) of the turbine. The generator supplies energy storage means (12 or 27) and control means (11) controls the operation of the system according to the power demand and the rate of increase of the power demand. The system allows for more rapid acceleration and rapid increase in the power demand.

FIG 1

## GAS TURBINE ENGINE DRIVE SYSTEM

This invention relates to gas turbine engine systems and particularly but not exclusively to such systems for use as the prime movers on vehicles.

It has been proposed to use gas turbines as the prime mover or power unit on vehicles but so far without much commercial success.

Gas turbines offer several desirable characteristics for land vehicles but in one particular respect gas turbines have hitherto proved unsatisfactory. This problem lies in the slow response of gas turbines between idling speed and higher speeds required for drive purposes. Although it is possible to reduce the response time, in certain applications this is still unacceptably slow. Increasing the idling speed to improve the rate of response results in excessive fuel consumption during periods when power is not required.

It has been proposed in US Patent No. 3894605 and in British patent specification No. 2076757 to use a gas turbine engine to drive an electrical generator, power from which is used to drive electrical motors but such arrangements still do not provide fuel consumption at idling speed and quick response on an equivalent basis to that possible with, say, reciprocating internal combustion engines.

It has also been proposed in British Patent specification No. 723266 to accelerate a gas turbine by a motor associated with the turbine.

An object of the invention is to provide a gas turbine engine system in which the response to an increased power requirement is relatively rapid and in which drive of driven means may be independent of the turbine.

Accordingly the invention provides a method of operating a gas turbine engine system having a gas turbine engine, an electrical generator/motor in driving/driven connection with the engine rotor, energy storage means for storing energy from the electrical generator, wherein energy from the storage means is usable by the motor to drive the turbine rotor whereby to increase the speed of the rotor, the system having control means whereby upon the energy demand on the engine increasing the energy is supplied from the storage means to the engine to accelerate the engine.

The invention also provides apparatus for carrying out the method of the invention comprising a gas turbine engine acting as a prime mover, an electrical generator/motor in driving connection with a rotor of the engine, energy storage means for storing energy from the generator, and control means for controlling the operation of the engine, the electrical generator/motor and the energy storage means according to the power demand and the rate of increase of power demand of the system, whereby at least at a rapid rate of increase of power demand the energy storage means is usable to increase the speed of operation of the gas turbine engine. However, the system may also be operable to use energy directly from the storage means until sufficient power is available from the prime mover or, in some cases, instead of using power from the prime mover.

The energy storage means may comprise a high specific power to weight and/or high specific energy to weight electrical storage battery or any combination of said batteries, whereby the battery stores electrical energy from the generator and supplies electrical power to the motor to increase the speed of the rotor upon demand.

Alternatively the energy storage means may comprise flywheel means having associated therewith a further electrical generator/motor whereby electrical energy from the generator associated with the engine rotor supplies the flywheel electrical motor to drive the flywheel and, upon the power demand on the turbine engine being increased, the rotating flywheel generates electrical energy through the associated flywheel generator and supplies such energy to the turbine electrical motor.

The gas turbine engine may be in direct driving connection with driven means, such as the drive wheels of a vehicle. Additionally or instead the drive means or certain of the drive means may be driven by an electrically operated motor or motors. Such motor or motors may be supplied from the battery or from the flywheel operated generator, and/or the motor or motors may be supplied direct from the engine driven generator.

The gas turbine engine may be a single or a two shaft gas turbine engine and in the case of a two shaft engine each shaft may have an associated electrically driven motor supplied by the energy storage means to drive the shaft and thereby rapidly boost the power available from the shafts through operation of the turbine.

Further features of the invention will appear from the following description of embodiments of the invention given by way of example only and with reference to the drawings, in which:-

Figure 1 is a schematic view of a gas turbine engine system for a vehicle,

Figure 2 is an outline view of a system based on the engine system of Figure 1,

Figure 3 is a view corresponding to Figure 2 with additional features,

Figure 4 is a view corresponding to Figure 2 with an alternative feature,

Figure 5 is a view corresponding to Figure 4 with an additional feature,

Figure 6 is a view corresponding to Figure 2 having a different gas turbine engine and driving arrangement,

Figure 7 is a view corresponding to Figure 6 with an additional feature.

Figure 8 is a view corresponding to Figure 6 with an alternative feature,

Figure 9 is a view corresponding to Figure 8 with an additional feature,

Figure 10 is a view corresponding to Figure 6 with an additional driving feature,

Figure 11 is a view corresponding to Figure 10 with an additional feature,

Figure 12 is a view corresponding to Figure 10 with an alternative feature,

Figure 13 is a view corresponding to Figure 11 with an alternative feature,

Figure 14 is a view corresponding to Figure 6 with a different driving arrangement,

Figure 15 is a view corresponding to Figure 14 with an additional feature,

Figure 16 is a view corresponding to Figure 14 with an alternative feature,

Figure 17 is a view corresponding to Figure 16 with an additional feature,

Figure 18 is a view corresponding to Figure 16 with an additional feature, and

Figure 19 is a view corresponding to Figure 18 with a further additional feature.

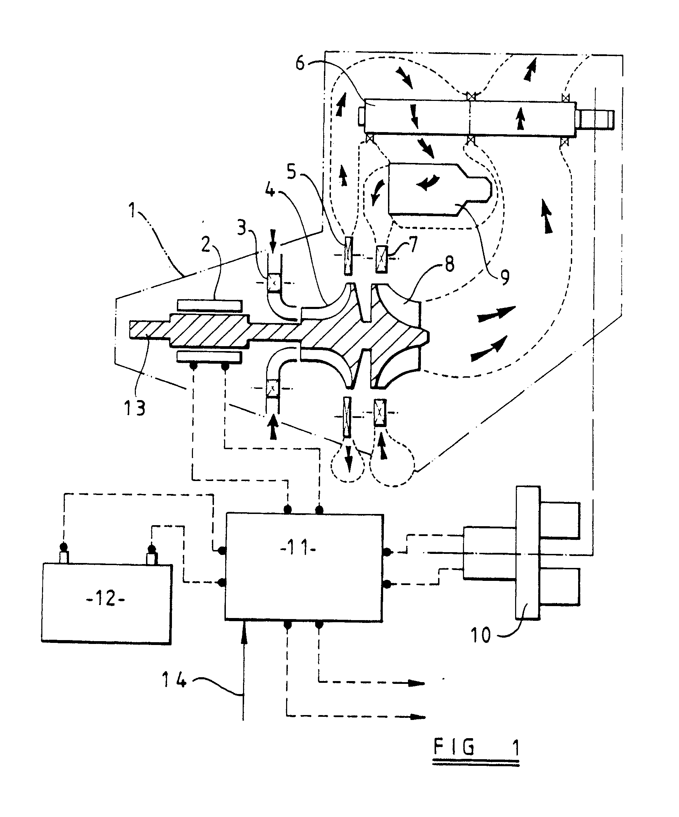

Referring to the drawings and firstly to Figure 1 a gas turbine engine system is shown. This system includes a single shaft heat exchanger gas turbine engine 1. Towards one end of the engine is located a shaft driven electrical generator/motor 2 which, as will be explained, is operable as a generator, as a motor to increase the speed of a rotating assembly 13 of the engine, or to act as a starter motor.

The engine 1 may employ variable pre-swirl vanes 3 and has a relatively light centrifugal compressor 4, preferably incorporating carbon fibre, whereby the inertia of the compressor is relatively low. Item 6 is a ceramic regenerator heat exchanger disc. Nozzle vanes 7 are provided which may be variable in orientation and when used with the variable pre-swirl vanes 3 can vary the engine air mass flow to reduce power and thus fuel flow requirement particularly at idling speeds.

The drawing depicts a low inertia high temperature radial flow turbine 8 but the turbine may be of the single or multi-stage axial flow kind. To enable the full potential of operation to be realised a wide range, low emission combustion chamber 9 is employed and the engine is relieved of drag of driving accessories by mounting such accessories remotely and driving by means of electric motor or motors 10 fed from a battery 12 and controlled by an electronic controller 11.

Power generated by the generator 2 is passed to the electronically-operated controller 11 and the controller controls the electrical supply to the battery storage means 12 which is conveniently of a high capacity, low weight type, such as a $LiPEO_{14}:LiClO_4/V_6O_{13}$ battery. In the other mode of operation the controller controls the supply of stored electrical energy from the battery 12 to the motor 2 to assist in the acceleration of the rotating assembly 13.

The battery 12 may also supply any electric motor or motors (not shown in Figure 1) which may be used for example to drive the wheels of a vehicle on which the system is located, as will be described.

In order to ease the problem of achieving a rapid response in accelerating the engine 1 from say low idle speed the engine includes a low enertia rotating assembly 13.

The controller 11 is fed with signals by the operator/driver through signal lines 14. Such signals will include throttle demands for speed and rate of increase of speed and the mode of drive to be employed such as direct from the engine 1, drive from the battery 12 or a combination thereof.

The controller having received control signals is programmed to select and control the operational mode of the engine 1, the generator/motor 2, the battery storage 12 and the ancilliary electrically driving/driven units 10, 22 and proportion the power suply being used to propel the vehicle between the energy stored in the batteries and that being generated by the engine according to the control signals and according to the predetermined programme of the controller.

The system is primarily intended for variable power applications such as in vehicles, for example cars, commercial vehicles and tanks and also in marine vessels such as submarines. In such applications the vehicle or vessel may need to rapidly change from low idling of the engine to full power or from partial power to full power, for example for acceleration from rest or for overtaking, respectively.

In these circumstances the gas turbine engine is normally unable to respond quickly enough to provide the necessary rate of increase in power output because the engine rotor needs to rapidly increase its rotational speed if the power output is to be rapidly increased. Making the rotor and associated rotational parts of a low inertia can assist in this as does increasing the idling speed, the latter with significant fuel consumption penalties, but even these improvements are not a complete answer to this problem.

The described system provides the capability of being operated in one or more modes to overcome this problem.

Thus, with the engine 1 at low idling speed and the storage battery 12 charged, a signal transmitted to the controller 11 to signal full engine speed or full power will cause the controller 11 to draw power from the battery 12 to operate the motor 2 at maximum driving torque. At the same time the controller 11 will signal to the engine to increase power output.

The rotating assembly 13 will speed up under the action of the motor 2 and will quickly reach a speed at which a high power output for the engine 1 is achieved. The motor 2 can then be operating as a generator to put electrical power back into the battery 12.

As will be described the engine may not be used or not wholly used for direct driving of the vehicle. The vehicle may include an electric drive motor or motors (as will be described). In such a case a signal to the controller for increased drive power will cause the controller 11 to increase or initiate drive to the vehicle electric motor or motors to give rapid response, taking power from the batteries, at the same time the engine power being increased with or without the aid of the motor 2. As before excess power from the engine will be converted by the generator 2 to electrical power.

In other circumstances the engine may be shut off so that the vehicle is run on battery storage power alone, as for example when the vehicle is operating under strict vehicle emission pollution control conditions, or under battle readiness conditions, or, when used in a submarine, when the submarine is submerged. In each case rapid acceleration of the vehicle may be achieved and the attained speed maintained until the engine is started to supplement battery power.

As will be described there are other variations in operating the system. For example other energy storage means such as a flywheel may be provided, the flywheel being arranged to generate electrical energy upon demand.

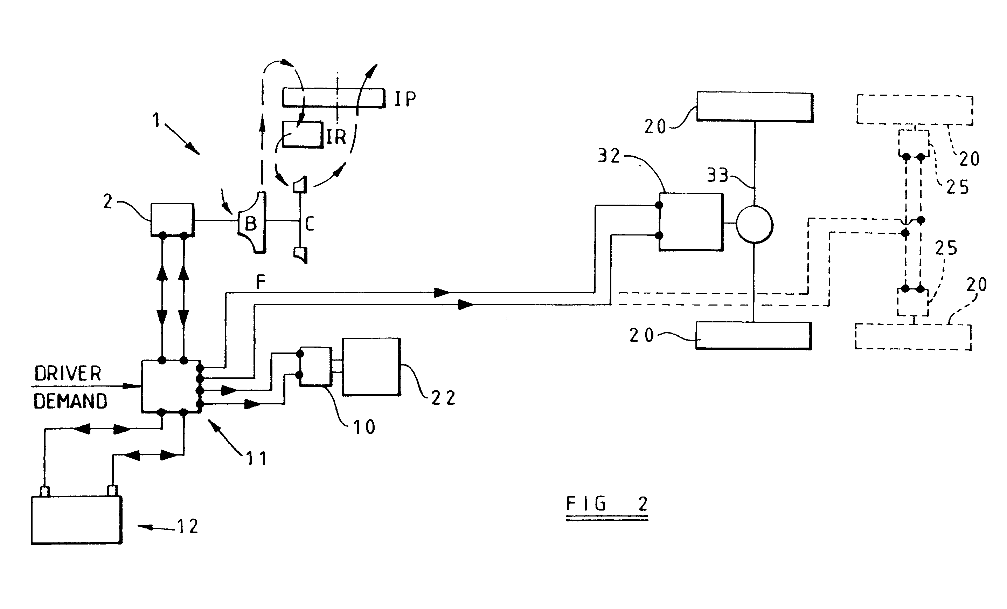

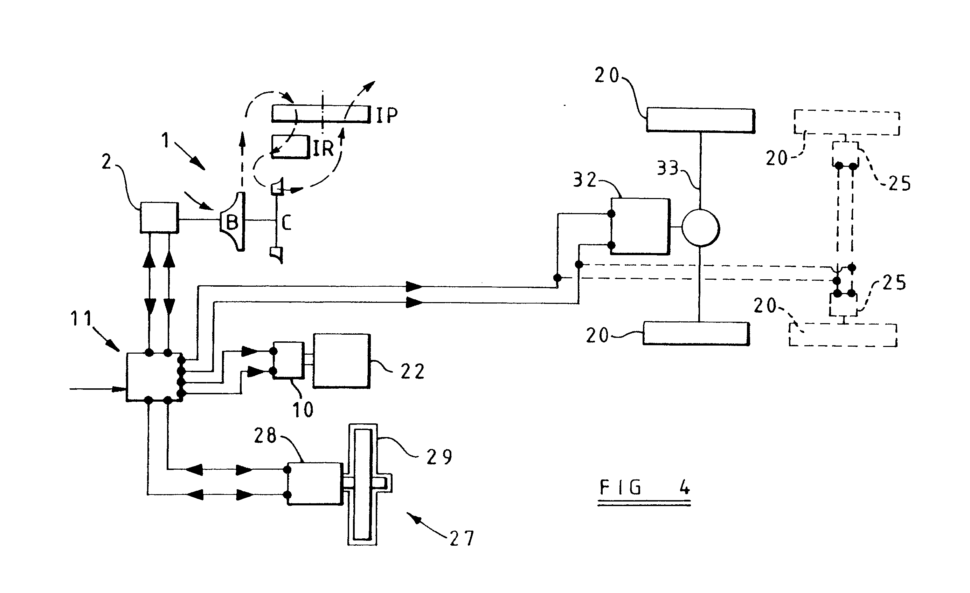

Referring now to Figure 2 the engine 1 employed is a single shaft turbine engine as in Figure 1 and the engine is not in this case in direct driving engagement with wheels 20. Instead the vehicle is provided with a traction motor 32 which derives electrical power from the energy storage means either in the form of a battery 12 or a flywheel assembly as in for example Figure 4.

The traction motor 32 drives the wheels 20 through gearing 33. Alternatively each of the wheels 20 is driven by an independent motor 25.

The engine also includes a heat exchanger 1P and a combustion chamber 1R.

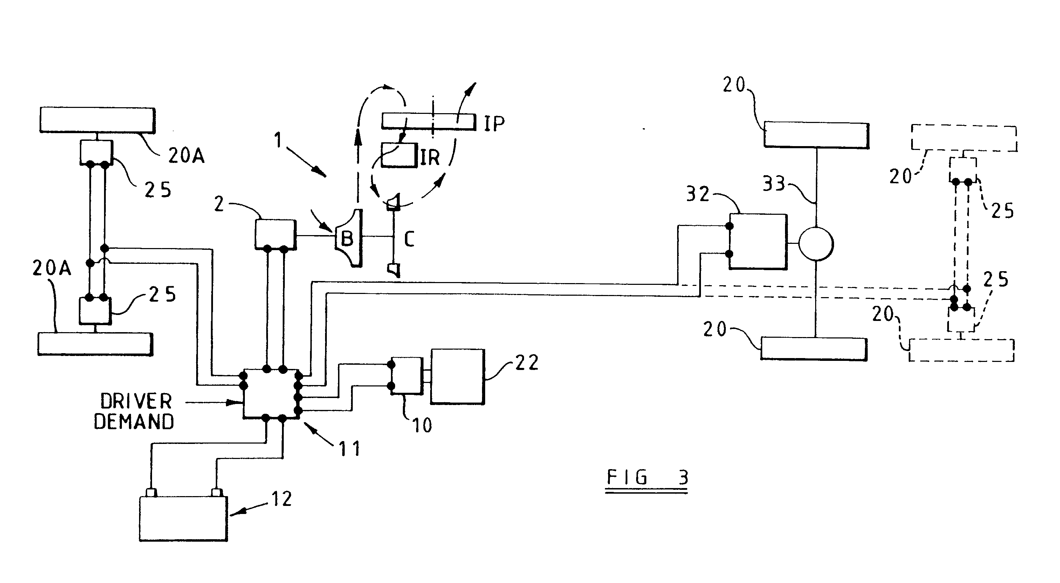

Figure 3 shows the same arrangement as figure 2 but with motors 25 added to another pair of wheels 20A.

Referring now to Figure 4 this shows a system similar to that of Figure 2 except that the battery 12 is replaced by an alternative form of energy storage means indicated by unit 27.

Unit 27 is a high speed electric motor/generator 28 and combined flywheel 29 assembly. Power for the assembly is provided by the generator 2 on the engine which operates the assembly as a motor to drive the flywheel 29.

The assembly 27 can be operated in the reverse mode i.e. as a generator to utilise the stored energy in the flywheel 29 and hence to supply the motor 2 of the engine with electrical power.

The flywheel 29 is a high inertia low weight flywheel which may operate in a vacuum.

Power to and from the assembly 27 is controlled through the controller 11.

Battery power for the system is also provided but, in this case, the battery power is not required for driving the vehicle but to service the usual electrical accessories.

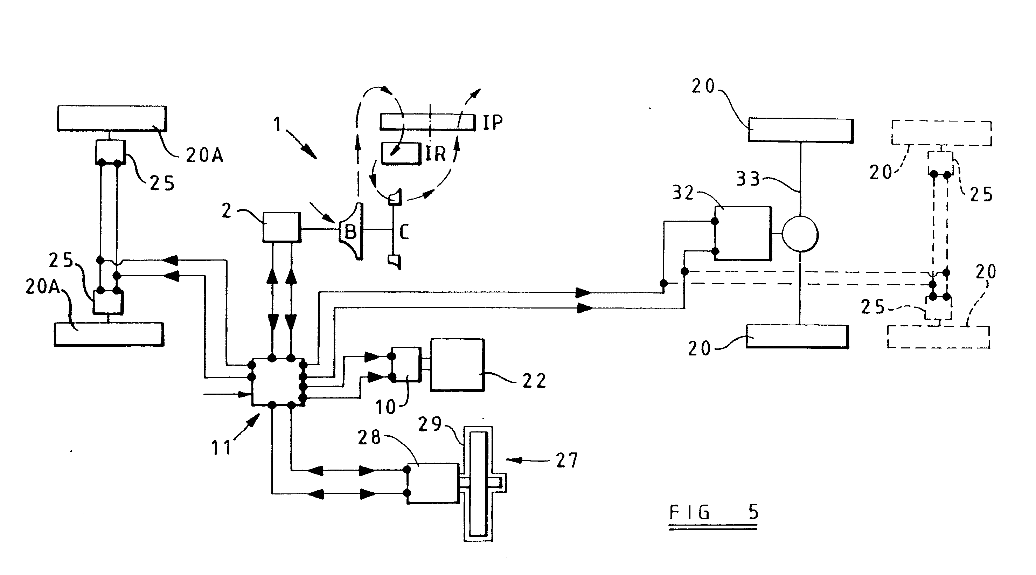

Figure 5 shows a similar arrangement to that of Figure 4 except that in this case, as with the Figure 3 arrangement, the vehicle is supplied with electric motors 25 for the wheels 20A for the same reasons. If necessary only one of the motors 25 may be driven.

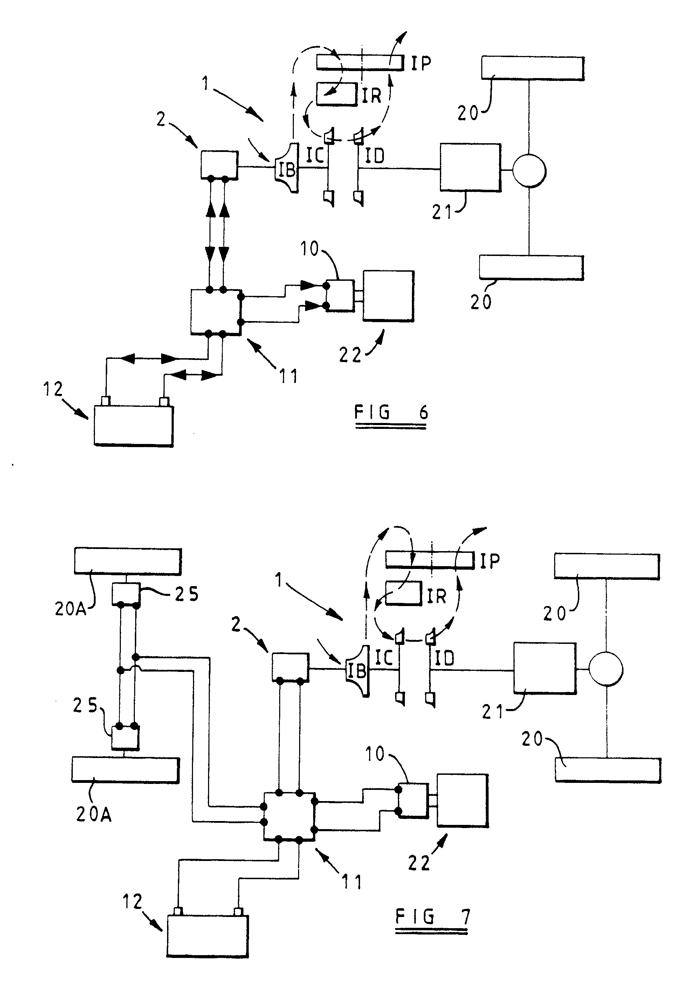

Referring now to Figure 6 a system is shown which differs from Figure 1 firstly in employing a two shaft free power turbine engine. In this case the first shaft comprises a gas generator including a compressor 1B and a turbine 1C. The second shaft includes a power turbine 1D.

The power turbine shaft 1D is in driving connection with, in this case, driving wheels 20 of a vehicle and the connection is through a gear box 21.

The gas generator shaft 1B, 1C is directly coupled to a high speed electric motor generator 2 as described in relation to Figure 1.

Referring now to Figure 7 in which a system similar to that of Figure 6 is shown to which has been added independently, electrically operated drive motor 25 for each of two wheels 20A of the vehicle. The motors 25 are supplied with electrical power from the batteries 12 either independently of the engine 1, for example when the engine is shut down or idling, as a four wheel drive system of the vehicle when the other two wheels 20 are driven by the engine, or to assist the engine driven wheels 20 when the vehicle is accelerating.

The provision of the motor 25 gives the possibility of the engine 1 idling at very low speeds or the engine stopped but still providing rapid acceleration characteristics for the vehicle.

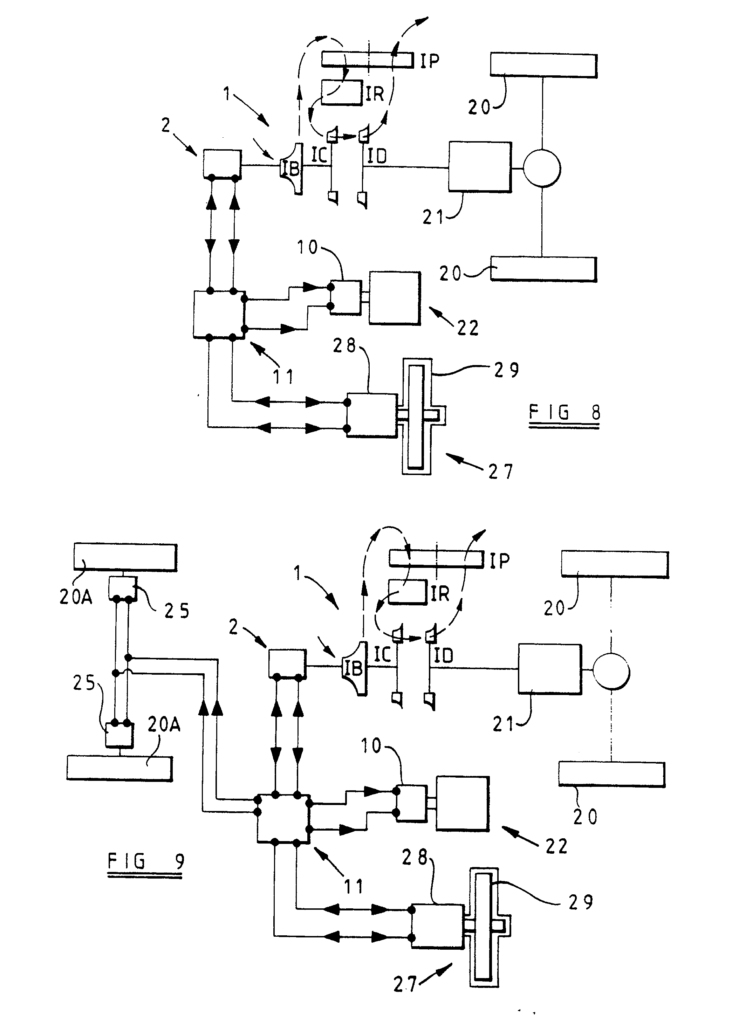

Figure 8 shows an arrangement similar to that of Figure 6 except that the battery energy storage means is replaced by a motor/generator 28/flywheel 29 arrangement, as previously described.

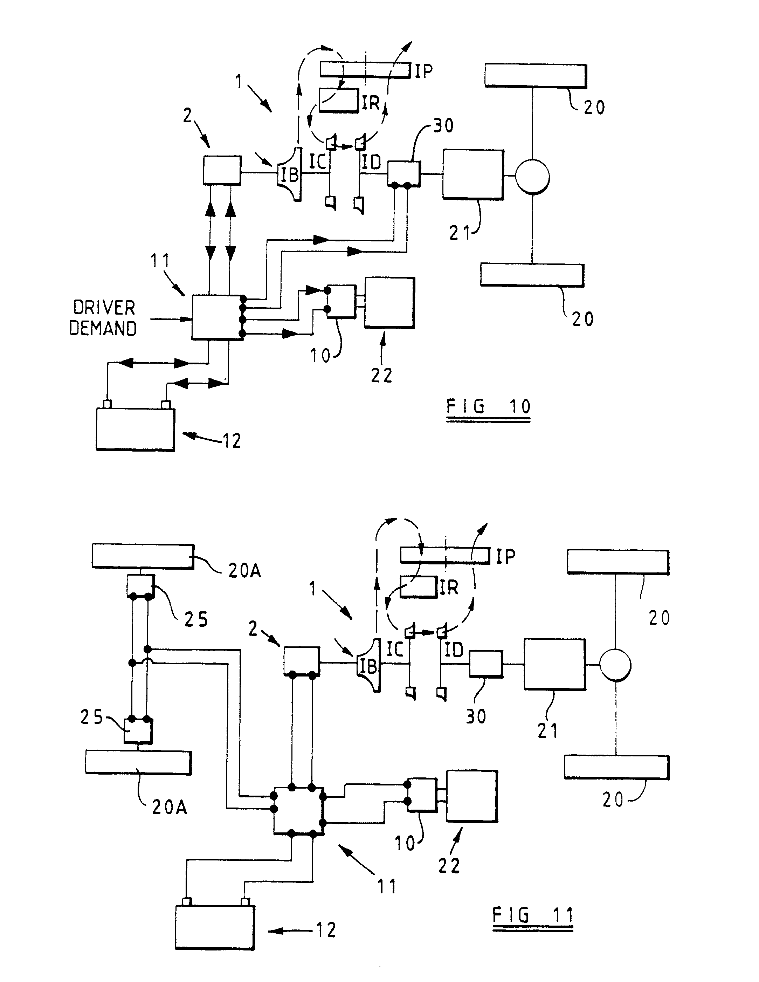

In Figure 9 is an arrangement the same as that of Figure 8 except that motors 25 are added to the wheels 20A.

Figure 10 shows a system similar to that of Figure 6 except that in this case a motor 30 is provided on the free power turbine shaft 1D in addition to the motor 2 on the compressor shaft IB, 1C. The motor 30 is controlled by the controller 11 from power supplied by the energy storage means, in this case a battery 12.

The motor 30 is provided to boost the power from the free turbine and can be an alternative to the motor 2 function.

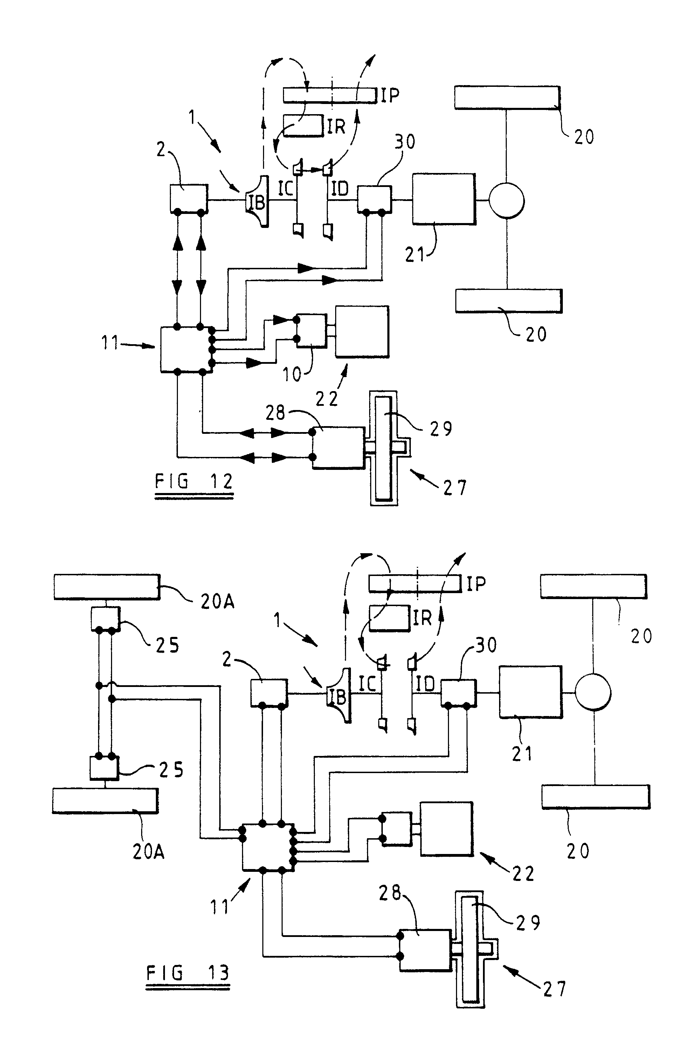

Figure 11 shows a system similar to that of Figure 10 except that, once again, the system includes electric motors 25 on the wheels 20A.

Figure 12 shows a system similar to that of Figure 8 except that, as for the Figure 10 arrangement, a motor 30 is provided on the free power turbine output shaft 1D.

Thus the energy storage means includes a generator/motor 28 and flywheel 29 assembly.

Referring now to Figure 13 the system is similar to that of Figure 12 except that electrical motors 25 are provided to drive the wheels 20A, the power being supplied by the flywheel assembly 27 or direct from the engine driven generator 2.

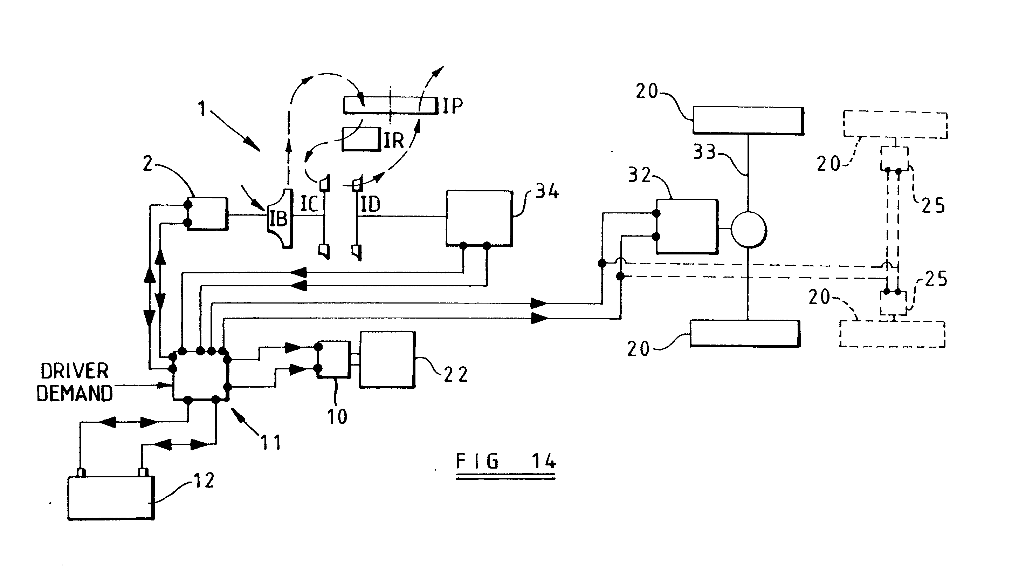

In Figure 14 a two shaft, free turbine engine, as in Figures 6-13, is shown in which the free turbine shaft 1D drives a generator 34 which provides the electrical power to charge a battery storage arrangement 12. The battery 12 supplies power for the traction motor 32 and the accessory driving motor. As before the traction motor 32 can be replaced by individual motors 25 for the wheels 20 as shown in chain lines.

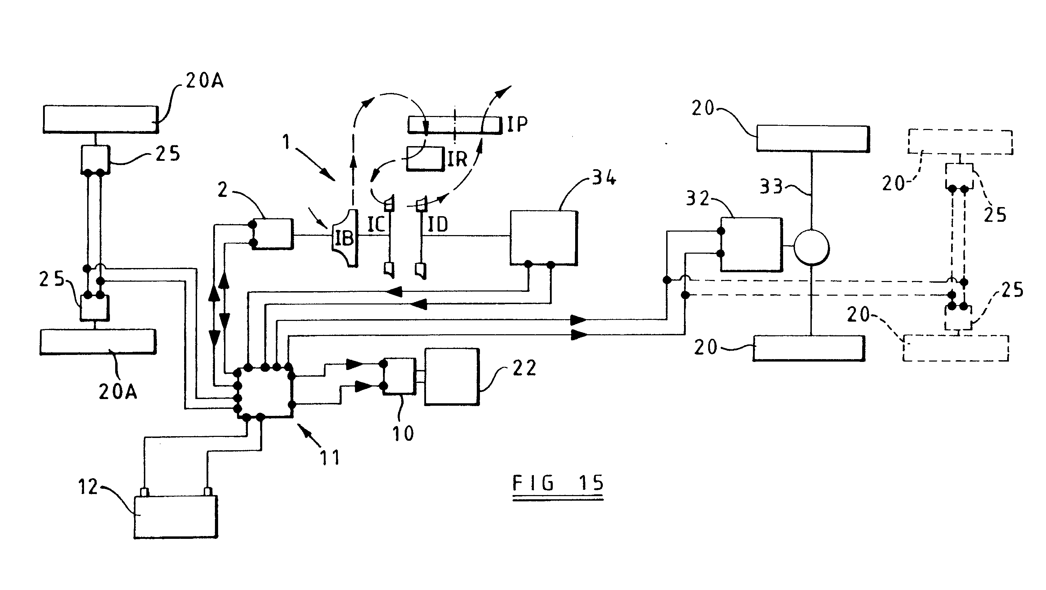

Figure 15 shows a similar arrangement to that of Figure 14 except that driving motors 25 are also provided for the wheels 20A either in addition to the traction motor 32 or in combination with drive motors 25 for the wheels 20.

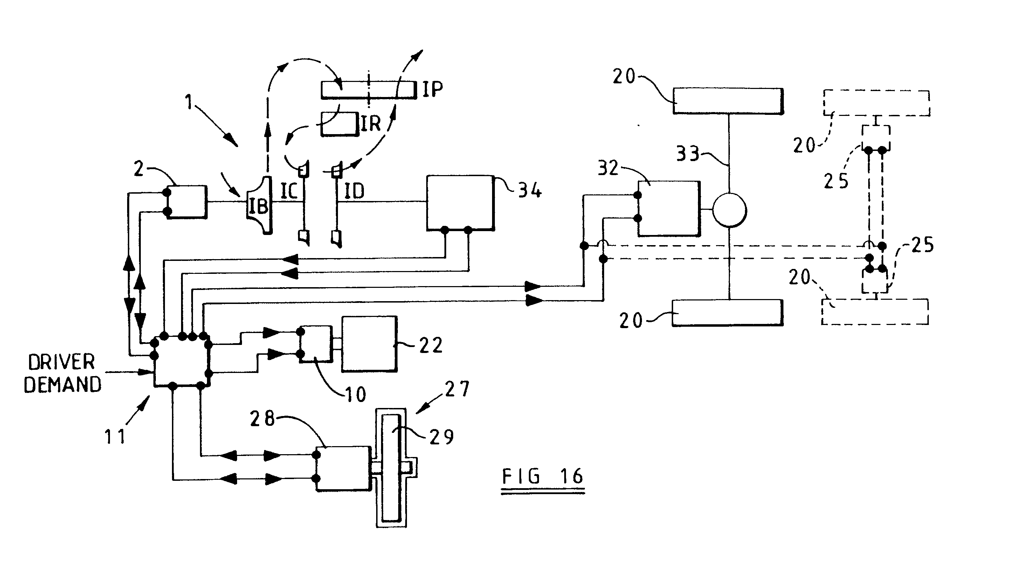

Figure 16 shows an arrangement similar to that of Figure 14 except that the battery energy storage means is replaced by a motor/generator 28/flywheel 29 arrangement, as previously described.

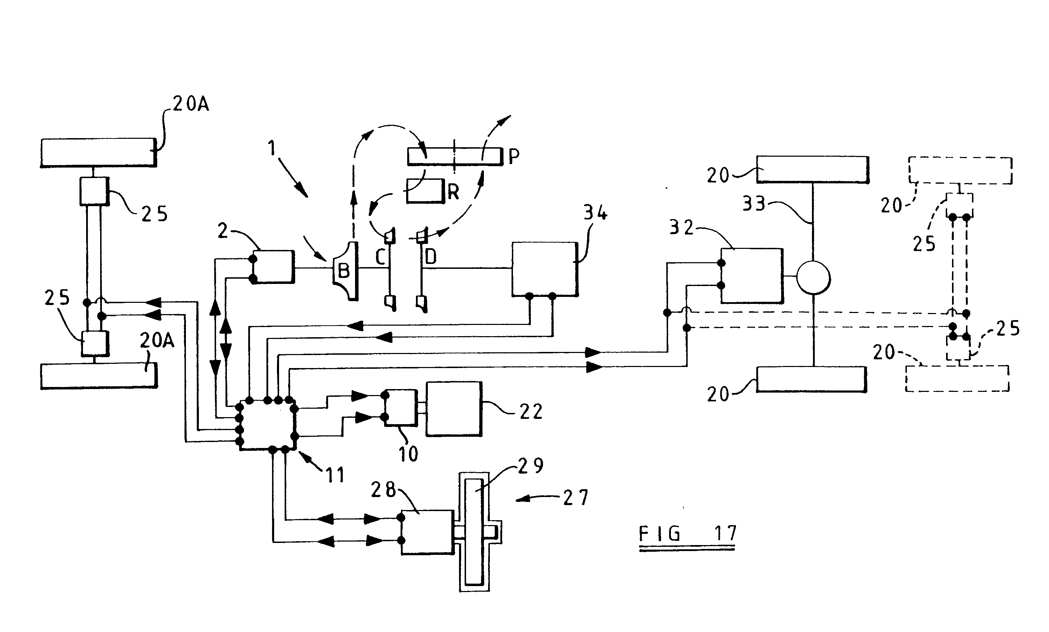

In Figure 17 is an arrangement the same as that of Figure 16 except that motors 25 are added to the wheels 20A to supplement either the traction motor 32 or individual motors 25 on the wheels 20.

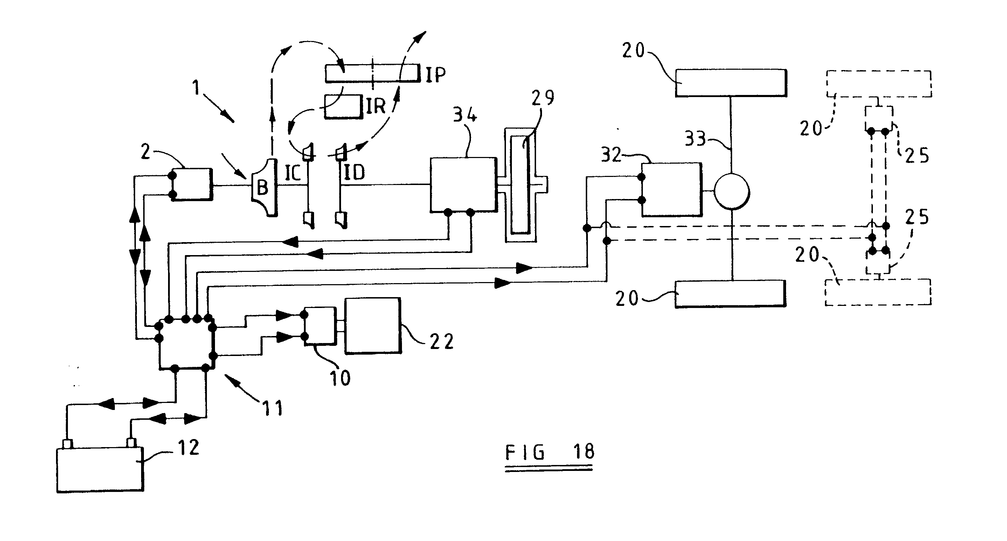

Figure 18 shows an arrangement in which a two shaft engine has the free power turbine shaft 1D driving a generator 34 which feeds electrical power during operation of the shaft 1D to the electrical storage means 12 through the controller 11.

The generator 34 is also associated with a flywheel 29 so that if the shaft 1D is out of action the flywheel 29 can operate the generator 34 to provide power to charge the battery storage means 12. The storage means 12 can then be the source of power for operating the traction motor 32. Once again the traction motor 32 can be replaced by motors 25 on the wheels 20.

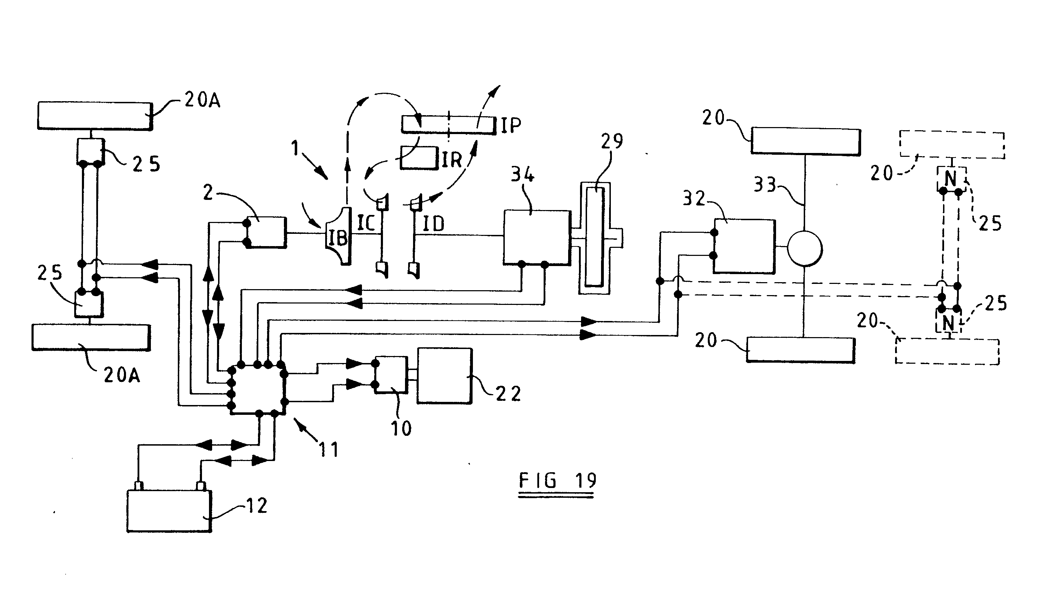

Figure 19 illustrates an arrangement identical with Figure 18 except that motors 25 are added to the wheels 20A.

It will be seen that by these arrangements, or at least some of them, the vehicle can be driven even when the turbine engine is inoperative by utilising the energy storage means. Moreover the arrangements provide rapid power build up even from very low idling speeds of the engine.

Two or multi wheel drive arrangements are possible with multi wheeled vehicles.

In each embodiment the equivalent parts are given the same reference numbers.

## Claims

1. A method of operating a gas turbine engine system having a gas turbine engine (1), an electrical generator/motor (2) in driving/driven connection with the engine rotor (13), and energy storage means (12) for storing energy from the electrical generator (2), wherein energy from the storage means (12) is usable by the motor (2) to drive the turbine rotor (13) whereby to increase the speed of the rotor, the system having control means (11) whereby upon the energy demand on the engine increasing, the energy is supplied from the storage means (12) to the engine (1) to accelerate the engine.

2. A method according to Claim 1 wherein the energy storage means (12) is directly connected to driven means (20, 25) whereby energy from the storage means is selectively used to drive the driven means.

3. Apparatus for carrying out the method of the invention comprising a gas turbine engine (1) acting as a prime mover, an electrical generator/motor (2) in driving connection with a rotor (13) of the engine, energy storage means (12) for storing energy from the generator (2), and control means (11) for controlling the operation of the system (1), the electrical generator/motor (2) and the energy storage means (12) according to the power demand and the rate of increase of power demand of the system, whereby at least at a rapid rate of increase of power demand the energy storage means (12) is usable to increase the speed of operation of the gas turbine engine (1).

4. Apparatus according to claim 3 wherein the energy storage means (12) comprises a high specific power/energy to weight electrical storage battery whereby the battery stores electrical energy from the generator and supplies electrical power to the motor (2) to increase the speed of the rotor upon demand.

5. Apparatus according to claim 3 wherein the energy storage means comprises flywheel means (27) having associated therewith a further electrical generator/motor (28) whereby electrical energy from the generator (2) associated with the engine rotor supplies the flywheel electrical motor (28) to drive the flywheel (27) and, upon the power demand on the turbine engine (1) being increased, the rotating flywheel generates electrical energy through the associated flywheel generator (28) and supplies such energy to the turbine electrical motor (2).

6. Apparatus according to claim 3, wherein the gas turbine engine (1) is in direct driving connection with driven means (20, 25), such as the drive wheels (20) of a vehicle.

7. Apparatus according to claim 6, wherein the driven means (20, 25) or certain of the driven means includes an electrically operated motor or motors (25).

8. Apparatus according to claim 7 wherein the motor or motors (25) are connected to the energy storage means (12, 27), and/or the motor or motors (25) are supplied direct from the engine driven generator (2).

9. Apparatus according to any one of the preceding claims wherein the gas turbine engine (1) is a single or a two shaft gas turbine engine.

10. Apparatus according to claim 9 wherein with a two shaft engine (1) each shaft has an associated electrically driven motor (2, 21) supplied by the energy storage means (12, 27) to drive the shaft and thereby rapidly boost the power available from the shafts through operation of the turbine.

FIG 1

FIG 2

DRIVER DEMAND

FIG 3

EP 0 414 535 A1

FIG 4

FIG 5

FIG 6

FIG 7

FIG 8

FIG 9

F I G   10

F I G   11

FIG 12

FIG 13

FIG 14

DRIVER DEMAND

FIG 15

17

FIG 16

F I G 17

EP 0 414 535 A1

FIG 18

IP

IR

IC ID

B

1

2

34

29

32

33

20

20

25

25

20

20

22

10

11

12

EP 0 414 535 A1

FIG 19

European
Patent Office

**EUROPEAN SEARCH
REPORT**

Application Number

**EP 90 30 9237**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,Y | DE-C-9 291 61   (FISCHER)<br>* the whole document *<br>- - - | 1-3,5,<br>7-10,1-10 | F 02 C 6/20<br>F 02 C 9/00<br>B 60 L 11/12<br>B 60 L 11/16 |
| Y | AU-A-5 406 11   (FENGLER)<br>* the whole document *<br>- - - | 1-10 | |
| A | US-A-4 309 620   (BOCK)<br>* the whole document *<br>- - - | 1-10 | |
| A | US-A-4 336 856   (GAMELL)<br>* the whole document *<br>- - - | 1-10 | |
| D,A | GB-A-7 232 66   (WILKS)<br>* the whole document *<br>- - - | 1,3 | |
| A | US-A-3 771 311   (HERBST)<br>- - - | | |
| A | DE-C-8 939 61   (GIGER)<br>- - - - - | | |

| TECHNICAL FIELDS SEARCHED (Int. Cl.5) |
|---|
| F 02 C<br>B 60 L<br>F 01 D |

The present search report has been drawn up for all claims

| Place of search | Date of completion of search | Examiner |
|---|---|---|
| The Hague | 13 November 90 | IVERUS D. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

&: member of the same patent family, corresponding document